# EUROPÄISCHE PATENTSCHRIFT

(11) **EP 1 975 604 B1**
(45) Veröffentlichungstag und Bekanntmachung des Hinweises auf die Patenterteilung: **20.08.2014**
(21) Anmeldenummer: 08001879.9
(22) Anmeldetag: 01.02.2008
(51) Int. Cl.: G01N 25/72

(54) **Vorrichtung zum Überprüfen der Griffleisten eines Flaschenkastens**
Device for examining the grip slats of a bottle crate
Dispositif de vérification des baguettes de prise d'une caisse de bouteilles

(30) Priorität: 24.03.2007 DE 102007014214
(43) Veröffentlichungstag der Anmeldung: 01.10.2008
(73) Patentinhaber: KRONES Aktiengesellschaft, 93073 Neutraubling (DE)
(72) Erfinder: Wentsch, Isabella, 75173 Pforzheim (DE)

(56) Entgegenhaltungen:
- EP-A1- 0 039 494
- DE-A1- 3 017 207
- DE-A1- 19 919 441
- DE-C1- 10 138 409

## Beschreibung

Die Erfindung betrifft eine Vorrichtung zum Überprüfen der Griffleisten eines Flaschenkastens.

Bei Flaschenkästen, die üblicherweise aus Kunststoff gefertigt sind, kann es vorkommen, dass im Bereich der Griffleisten feine Haarrisse entstehen, insbesondere wegen hoher und/oder wiederholter Belastung oder wegen unsachgemäßem Absetzen oder Stapeln derartiger Kästen. Diese Haarrisse sind mit dem bloßen Auge praktisch nicht sichtbar. Wenn eine Person einen solchen Kasten mit einem Bruch in diesem Griffleistenbereich anhebt, kann es passieren, dass sich an der Bruchstelle die aneinander stoßenden Leistenabschnitte gegeneinander versetzen und man sich dort die Finger einklemmen kann. Auch wird dadurch die Tragfähigkeit beeinträchtigt, so dass die Gefahr besteht, dass die Leiste vollständig abbricht und der Kasten beim Anheben zu Boden fällt.

Man hat daher bereits Verfahren und Vorrichtungen zum Untersuchen von Kästen auf Brüche im Griffleistenbereich vorgeschlagen. In der deutschen Patentschrift 10138409 und dem deutschen Gebrauchsmuster 20114959 werden zu diesem Zweck Ultraschallgeräte verwendet. Auch hat man schon vorgeschlagen, mechanisch wirkende Druckrollen einzusetzen, die die Verformbarkeit der Griffleisten überprüfen.

Die Auswertung der Ergebnisse eines Ultraschallsensors ist jedoch relativ aufwendig. Andererseits ist die mechanische Überprüfung mit Druckrollen mit der Gefahr verbunden, dass man die Griffleisten durch die Messung selbst schwächt oder dass man je nach Bruchlinienverlauf nicht immer eine Schwächung zuverlässig feststellen kann.

Der Erfindung liegt die Aufgabe zugrunde, ein verbessertes Verfahren zur Überprüfung von Griffleisten von Flaschenkästen und eine Vorrichtung hierfür vorzuschlagen.

Gelöst wird diese Aufgabe dadurch, dass der Flaschenkasten zunächst erwärmt und im noch erwärmten Zustand dann mit einer Wärmebildkamera untersucht wird. Es hat sich gezeigt, dass selbst feinste Haarrisse in einfacher Weise mit einer Wärmebildkamera festgestellt werden können, wenn der Flaschenkasten eine gegenüber der Umgebung erhöhte Temperatur aufweist. Selbst bei feinsten Haarrissen ist der Wärmeausgleich zwischen den durch den Riss getrennten Bereichen im Griff erschwert. Dies macht sich durch eine veränderte Temperaturfarbe im Rissbereich auf dem Wärmebild erkenntlich.

In vorteilhafter Ausgestaltung der Erfindung nutzt man zur Erwärmung die Tatsache, dass die Flaschenkästen üblicher Weise in einer Kastenwaschmaschine gewaschen werden und ordnet die Wärmebildkamera stromab der Kastenwaschmaschine in einem Bereich an, in dem die Flaschenkästen noch warm sind. Mit anderen Worten braucht man nur eine Wärmebildkamera stromab der Flaschenkastenwaschmaschine anzuordnen, um das gewünschte Ergebnis einfach erhalten zu können.

Es wäre auch denkbar, die Kästen auf einem Transportband durch einen separaten Heiztunnel zu schicken, in dem beispielsweise ein Wärmestrahler oder eine Warmluftquelle angeordnet ist. Bereits eine geringfügige Erwärmung über die Umgebungstemperatur reicht aus, mit einer stromab davon angeordneten Wärmebildkamera Risse feststellen zu können.

Die Vorrichtung zur Durchführung des Verfahrens verwendet eine Wärmebildkamera, die so angeordnet ist, dass sie ein Wärmebild der Griffleisten eines erwärmten Flaschenkastens erzeugen kann. Wie erwähnt, kann diese Kamera stromab einer Kastenwaschmaschine in der Abförderstrecke der Flaschenkästen angeordnet sein. Als Wärmebildkamera kommt insbesondere eine Infrarotkamera in Frage.

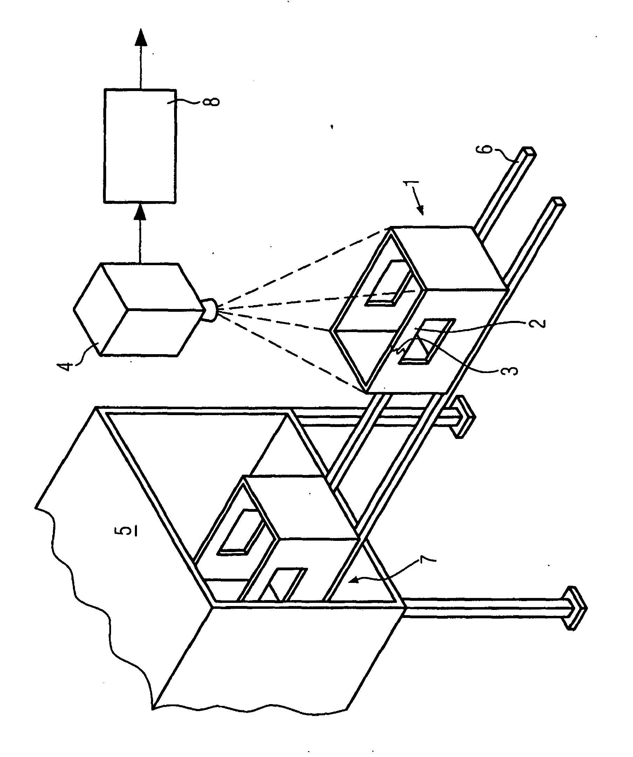

Die Erfindung wird im folgenden anhand des in der Zeichnung dargestellten Ausführungsbeispiels erläutert.

Dabei zeigt die einzige Figur eine schematische Ansicht der erfindungsgemäßen Prüfstation.

In der schematisch dargestellten Zeichnung ist zu erkennen, wie ein Flaschenkasten 1 die Flaschenkastenwaschmaschine 5 verlässt und auf einem Förderband 6 vorzugsweise kontinuierlich wegtransportiert wird. Im Bereich des Förderbands ist eine beispielsweise von einer Triggerlichtschranke ansteuerbare Wärmebildkamera, insbesondere eine Infrarotkamera 4 so angeordnet, dass sie entweder im Wesentlichen senkrecht von oben auf die Kästen schaut oder aber auch seitlich. Die Bildaufnahme kann vor einem neutralen Bildhintergrund erfolgen. Diese Kamera 4 kann eventuell im Bereich der Tragegriffe 2 oder auch sonst im oberen Randbereich vorhandene feine und auch größere Risse 3 durch eine Bildauswertung erfassen. Da die Kästen erwärmt aus der Flaschenkastenwaschmaschine 5 auslaufen, lässt das Wärmebild feine Haarrisse erkennen, weil dort der Temperaturausgleich mit anderem Koeffizienten wie im übrigen homogenen Bereich des Flaschenkastens erfolgt. Das Ergebnis der Wärmebildkamera wird an eine Auswerteeinheit 8 weitergegeben. Ggf. können von dort dann Steuersignale erzeugt werden, die zu einem automatischen Aussortieren als fehlerhaft erkannter Flaschenkästen herangezogen werden können. Vorteilhafterweise ist das Förderband 6 aus zwei parallelen schmalen, nur die Kästenränder unterstützenden Bändern gebildet.

An Einsatzorten, an denen keine Flaschenkastenwaschmaschine eingesetzt wird, kann die erfindungsgemäße Idee auch umgesetzt werden, wenn die Kästen vor der Kamera durch einen Wärmetunnel, Tauchbad oder dgl. geschickt werden.

## Patentansprüche

1. Verfahren zur Überprüfung der Griffleisten eines Flaschenkastens, **dadurch gekennzeichnet, dass** der Flaschenkasten zunächst erwärmt und im noch erwärmten Zustand dann mit einer Wärmebildkamera untersucht wird.

2. Verfahren nach Anspruch 1, **dadurch gekennzeichnet, dass** die Erwärmung in einer Kastenwaschmaschine (5) erfolgt und ein Wärmebild stromab der Kastenwaschmaschine aufgenommen wird.

3. Verfahren nach Anspruch 1, **dadurch gekennzeichnet, dass** die Erwärmung in einem Heiztunnel erfolgt und das Wärmebild stromab des Heiztunnels aufgenommen wird.

4. Vorrichtung zur Durchführung des Verfahrens nach Anspruch 1, mit einer Kastenwaschmaschine oder einem Wärmetunnel oder einem Tauchbad, einer Förderstrecke für Flaschenkästen und einer Wärmebildkamera (4), die so ausgebildet und angeordnet ist, dass sie ein Wärmebild der Griffleisten (2) eines erwärmten Flaschenkastens (1) erzeugen kann, wobei die Wärmebildkamera (4) stromab einer Kastenwaschmaschine (5) oder eines Wärmetunnels oder eines Tauchbades in der Förderstrecke (6) der Flaschenkästen angeordnet ist.

## Claims

1. Method of checking the grip handles of a bottle crate, **characterised in that** the bottle crate is first heated and is then inspected with a thermal imaging camera while still in the heated state.

2. Method according to claim 1, **characterised in that** the heating is carried out in a crate washer (5) and a thermal image is recorded downstream of the crate washer.

3. Method according to claim 1, **characterised in that** the heating is carried out in a heating tunnel and the thermal image is recorded downstream of the heating tunnel.

4. Device for carrying out the method according to claim 1, comprising a crate washer or a heating tunnel or an immersion bath, a conveying section for bottle crates and a thermal imaging camera (4) designed and arranged in such a manner that it can produce a thermal image of the grip handles (2) of a heated bottle crate (1), the thermal imaging camera (4) being arranged downstream of a crate washer (5) or a heating tunnel or an immersion bath in the conveying section (6) for the bottle crates.

## Revendications

1. Procédé permettant de contrôler les baguettes de manipulation d'une caisse de bouteilles,
**caractérisé en ce que**
la caisse de bouteilles est tout d'abord chauffée puis, à l'état encore chaud analysée par une caméra à imagène thermique.

2. Procédé conforme à la revendication 1,
**caractérisé en ce que**
le réchauffement est effectué dans une machine à laver les caisses (5) et une image thermique est prise en aval de la machine à laver les caisses.

3. Procédé conforme à la revendication 1,
**caractérisé en ce que**
le réchauffement est effectué dans un tunnel de chauffage et l'image thermique est prise en aval du tunnel de chauffage.

4. Dispositif permettant la mise en oeuvre du procédé conforme à la revendication 1,
comportant une machine à laver les caisses ou un tunnel de chauffage, ou un bain d'immersion, une ligne d'alimentation des caisses de bouteilles et une caméra à imagène thermique (4) qui est réalisée et positionnée de sorte qu'elle puisse permettre d'obtenir une image thermique des baguettes de manipulation (2) d'une caisse de bouteilles chauffée, la caméra à imagerie de thermique (4) étant positionnée en aval d'une machine à laver les caisses (5) ou d'un tunnel de chauffage ou d'un bain d'immersion dans la ligne d'alimentation (6) des caisses de bouteilles.
